# EUROPÄISCHE PATENTSCHRIFT

(11) **EP 3 153 885 B1**
(45) Veröffentlichungstag und Bekanntmachung des Hinweises auf die Patenterteilung: **23.05.2018**
(21) Anmeldenummer: 15189223.9
(22) Anmeldetag: 09.10.2015
(51) Int. Cl.: G01S 17/02, G01S 17/42, G05B 19/042

(54) **OPTOELEKTRONISCHE SCHUTZEINRICHTUNG**
OPTO-ELECTRONIC PROTECTIVE DEVICE
DISPOSITIF DE PROTECTION OPTOELECTRONIQUE

(43) Veröffentlichungstag der Anmeldung: 12.04.2017
(73) Patentinhaber: SICK AG, 79183 Waldkirch (DE)
(72) Erfinder: Böhler, Frank, 79639 Grenzach-Wyhlen (DE); Böhme, Max, 79112 Freiburg (DE); Esau, Mark, Bloomington, MN 55438 (US)

(56) Entgegenhaltungen:
- DE-A1- 10 324 628
- GB-A- 2 462 590

## Beschreibung

Die Erfindung betrifft eine optoelektronische Schutzeinrichtung nach dem Oberbegriff des Anspruchs 1.

Solche Schutzeinrichtungen werden zum Beispiel an Anlagen wie Pressen, Stanzen, Schweißrobotern und dergleichen eingesetzt, bei denen ein Gefahrenbereich, z.B. ein Zugangsbereich, überwacht werden muss, der beim Betrieb der Maschine von einer Bedienperson nicht betreten werden darf. Wird mit Hilfe der Schutzeinrichtung die Anwesenheit eines unzulässigen Gegenstands - also zum Beispiel ein Bein einer Bedienperson - im Gefahrenbereich festgestellt, werden alle gefahrbringenden Bewegungen gestoppt. Nach diesem Stopp sind bewusste Aktionen erforderlich, um die Anlage in Gang zu setzen. Hierzu zählt das manuelle Rücksetzen der Schutzeinrichtung zum Vorbereiten des Wiederanlaufs der Anlage.

Häufig werden als optoelektronische Schutzeinrichtung Sicherheitslaserscanner eingesetzt, wie sie beispielsweise aus der DE 43 40 756 A1 bekannt sind. Ein von einem Laser erzeugter Lichtstrahl wird über eine Lichtablenkeinheit in eine Scanebene gelenkt und dort von einem gegebenenfalls vorhandenen Gegenstand remittiert. Das remittierte Licht gelangt wieder zurück zum Laserscanner und wird dort von einem Empfänger detektiert. Die Lichtablenkeinheit ist in der Regel schwenkbar bzw. drehbar ausgestaltet, so dass der von dem Laser erzeugte Lichtstrahl eine durch die Schwenk- bzw. Drehbewegung erzeugte Scanebene periodisch überstreicht. Wird ein vom Gegenstand remittiertes Lichtsignal aus der Scanebene empfangen, so kann aus der Winkelstellung der Ablenkeinheit auf die Winkellage des Gegenstands in der Scanebene geschlossen werden. Wird zusätzlich zum Beispiel die Laufzeit von einzelnen Laserlichtpulsen vom Aussenden bis zum Empfang einer Reflexion an dem Gegenstand überwacht, kann aus der Laufzeit unter Verwendung der Lichtgeschwindigkeit zusätzlich auf die Entfernung des Gegenstands vom Laserscanner geschlossen werden. Mit den Winkel- und Entfernungsangaben lässt sich der Ort eines Gegenstands ermitteln und zum Beispiel zweidimensionale Schutzfelder innerhalb der Scanebene vollständig überwachen. Befindet sich im Schutzfeld ein unzulässiger Gegenstand, so kann von der Auswerteeinheit des Scanners ein entsprechendes Warn- oder Stoppsignal ausgegeben werden. Die Abmessungen der Schutzfelder sind in der Regel parametrierbar. Heutige Laserscanner sind auch in der Lage, zwischen verschiedenen Schutzfeldern, die in ihrem Sichtbereich definiert sind, umzuschalten, so dass ein Laserscanner mehrere Schutzfelder, die selbstverständlich nur in seinem Sichtbereich liegen können, überwachen kann.

Derartige Schutzeinrichtungen müssen zuverlässig arbeiten und deshalb hohe Sicherheitsanforderungen, beispielsweise die Norm EN13849 für Maschinensicherheit und die Gerätenorm EN61496 für berührungslos wirkende Schutzeinrichtungen (BWS), erfüllen.

Einige der so überwachten Bereiche, z.B. ein Zugangsbereich, werden z.B. von Bedienpersonen häufiger oder sogar regelmäßig betreten, um z.B. Material zu der Anlage zuzuführen. Die Sicherheitsnorm schreibt es dann vor, dass die Anlage nur dann automatisch selbsttätig wieder anfahren kann, wenn sichergestellt ist, dass eine gefährliche Situation nicht existieren kann ("only if a hazardous situation cannot exist"). Das kann aber durch automatische Schutzeinrichtungen fast nie sichergestellt werden, denn diese können nicht jeden freien Winkel einer abzusichernden Anlage erfassen. So ist es immer möglich, dass eine Person zwar die Schutzbereiche der Schutzeinrichtung nicht mehr verletzt, aber sich dennoch im Gefahrenbereich einer Anlage befindet, z.B. durch Klettern auf ein Anlagenteil oder sonstiges "Verstecken" in der Maschine. Die Forderung der Sicherheitsnorm wird dann dadurch erfüllt, dass die Anlage manuell anzufahren ist durch manuelles Betätigen einer Rücksetzeinrichtung (Reset-Taster) und darauffolgendes manuelles Betätigen eines Restart--Tasters. Das ist jedes Mal aufwändig.

Aus der DE 103 24 628 A1 ist eine Absicherung für einen Roboter bekannt mit den Merkmalen des Oberbegriffs des Anspruchs 1.

Ausgehend von diesem Stand der Technik ist es Aufgabe der Erfindung, eine verbesserte Schutzeinrichtung und ein entsprechendes Überwachungsverfahren bereitzustellen, mit dem zwar die Sicherheit gewährleistet bleibt, aber der Wiederanlauf der Anlage vereinfacht ist.

Diese Aufgabe wird gelöst, durch eine Einrichtung mit den Merkmalen des Anspruchs 1 und ein Verfahren mit den Merkmalen des Anspruchs 8.

Die erfindungsgemäße optoelektronische Schutzeinrichtung dient zur optischen Überwachung mehrerer Schutzbereiche auf Verletzung durch wenigstens ein Objekt und zur Steuerung einer abzusichernden Anlage. Sie weist wenigstens eine Lichtsendeeinheit, mit der Sendelicht in die Schutzbereiche ausgesendet wird, eine Lichtempfangseinheit, mit dem an dem Objekt reflektiertes Sendelicht empfangen wird und in elektrische Empfangssignale umgewandelt wird und eine Auswerteeinheit zur Auswertung der Empfangssignale auf, um festzustellen, welcher der Schutzbereiche durch das Objekt verletzt wird (Schutzbereichsverletzung) und welchen Schutzbereich das Objekt verlassen hat (Schutzbereichsfreigabe). Erfindungsgemäß ist eine Steuerung vorgesehen zur Erzeugung und Ausgabe eines Schaltsignals, das ein Freigabesignal zur Freigabe des Anlagenbetriebs ist und dass die Steuerung dazu ausgebildet ist, das Freigabesignal nur dann auszugeben, wenn die Steuerung eine vorbestimmte Reihenfolge von Ereignissen, bestehend aus Schutzbereichsverletzungen und Schutzbereichsfreigaben der verschiedenen Schutzbereiche, erkennt.

Der wesentliche Vorteil einer so ausgebildeten Schutzeinrichtung ist die Möglichkeit, dass die abzusichernde Anlage dann automatisch nach dem Freigabesignal wieder anlaufen kann. Die Schutzeinrichtung erfasst die mehreren Schutzbereiche und stellt fest, in welcher Reihenfolge diese verletzt werden und wieder freigegeben werden. Auf diese Weise kann ein Weg einer Person durch die Schutzbereiche auf einfache Weise verfolgt werden und zwar durch die an sich "dumme" Schutzeinrichtung, die im Prinzip nur feststellt, ob ein Schutzbereich verletzt ist oder nicht. Durch die zusätzliche, erfindungsgemäße Erfassung der Reihenfolge ist jetzt aber eine Möglichkeit geschaffen, diejenigen Situationen, in denen eine Person die Anlage betritt und wieder verlässt, von anderen Situationen, die potentiell Gefahr bergen, unterscheiden zu können. Dann kann sicher gesagt werden, dass die Person, die die Anlage betreten hat, diese auch wieder verlassen hat und das Merkmal der Norm "a hazardous situation cannot exist" erfüllt ist. Ein automatischer Wiederanlauf kann dann erfolgen. Das erspart Zeit, Aufwand und damit Produktionskosten. Die Produktivität ist erhöht.

Ebenso ist die Schutzeinrichtung besser vor Fehlgebrauch geschützt. So ist ein manueller Anlauf der Anlage keine Routinemaßnahme mehr, sondern eine außergewöhnliche Gefahrensituation, die wegen ihrer Besonderheit dann auch als solche besser erkannt und mit mehr Vorsicht behandelt wird. Das erhöht weiter die Sicherheit.

In diesen besonderen Situationen, wenn also die Reihenfolge der Ereignisse (Schutzbereichsverletzungen - Schutzbereichsfreigaben) nicht eingehalten ist, ist der automatische Wiederanlauf gesperrt und die Anlage kann nur in bekannter Weise mit manuellem Reset und Restart wieder angefahren werden.

Um keine unüberwachten Lücken zwischen den Schutzbereichen entstehen zu lassen, ist es vorteilhaft, wenn die Schutzbereiche benachbart sind und bevorzugt lückenlos aneinandergrenzen oder sogar zumindest teilweise überlappen. Auch eine vollständige Überlappung der verschiedenen Schutzbereiche wäre möglich. Dann müssten sie aber zumindest unterschiedlich groß sein, so dass es örtliche Bereiche gibt, die eindeutig nur einem Schutzbereich zugeordnet sind.

In Weiterbildung der Erfindung weist die Einrichtung einen Ausgang für ein Stopp-Signal auf, wobei die Steuerung ausgebildet ist, das Stopp-Signal zu erzeugen, wenn im Normalbetrieb der Anlage ein Schutzfeld verletzt wird. Die Schutzeinrichtung dient also nicht nur zum sicheren Steuern eines Wiederanlaufs, sondern wie bisher auch als Schutzeinrichtung für das Anhalten gefahrbringender Bewegungen.

In Weiterbildung der Erfindung weist die Steuerung einen Zeitgeber auf, so dass die Auswerteeinheit überwachen kann, ob aufeinanderfolgende Ereignisse innerhalb bestimmter Zeitfenster erfolgen.

Zur Überwachung mehrerer Schutzbereiche, wie es für die Erfindung erforderlich ist, sollte die Einrichtung möglichst einfach ausgebildet sein. Deshalb weist in Weiterbildung der Erfindung die Lichtsendeeinheit nur einen Lichtsender auf und die Lichtempfangseinheit nur einen Lichtempfänger auf.

Zur Überwachung mehrerer Schutzbereiche ist ein Laserscanner besonders geeignet, dessen einer Sendelichtstrahl die Schutzbereiche überstreicht. So kann mit nur einem Gerät die Überwachung erfolgen. Der Laserscanner könnte sogar auch die Steuerung beinhalten. Alternativ kann die Steuerung auch separat vorgesehen sein, an die der Laserscanner angeschlossen ist.

Wie oben erwähnt, wird die Aufgabe in analoger Weise auch durch ein Verfahren gelöst. Nach dem erfindungsgemäßen Verfahren werden mehrere Schutzbereiche auf Verletzung durch wenigstens ein Objekt optisch überwacht und eine abzusichernde Anlage gesteuert. Bei dem Verfahren wird
- Sendelicht von einer Lichtsendeeinheit in die Schutzbereiche ausgesandt,
- an dem Objekt reflektiertes Sendelicht mit einer Lichtempfangseinheit empfangen und in elektrische Empfangssignale umgewandelt,
- die Empfangssignale von einer Auswerteeinheit ausgewertet um festzustellen, welcher der Schutzbereiche durch das Objekt verletzt wird (Schutzbereichsverletzung) und welchen Schutzbereich das Objekt verlassen hat (Schutzfeldfreigabe)
- ein Schaltsignal, das ein Freigabesignal zur Freigabe des Anlagenbetriebs ist, in einer Steuerung erzeugt und von dieser ausgegeben
- und das Freigabesignal wird von der Steuerung nur dann ausgegeben, wenn die Steuerung eine vorbestimmte Reihenfolge von Ereignissen, bestehend aus Schutzbereichsverletzungen und Schutzbereichsfreigaben der verschiedenen Schutzbereiche, erkennt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer abzusichernden Anlage mit einer erfindungsgemäßen Schutzeinrichtung in der Seitenansicht;
- Fig. 2: eine schematische Darstellung der abzusichernden Anlage aus Fig. 1 in der Draufsicht;
- Fig. 3: eine schematische Darstellung der optoelektronischen Schutzeinrichtung in einer Ausführungsform als Laserscanner.

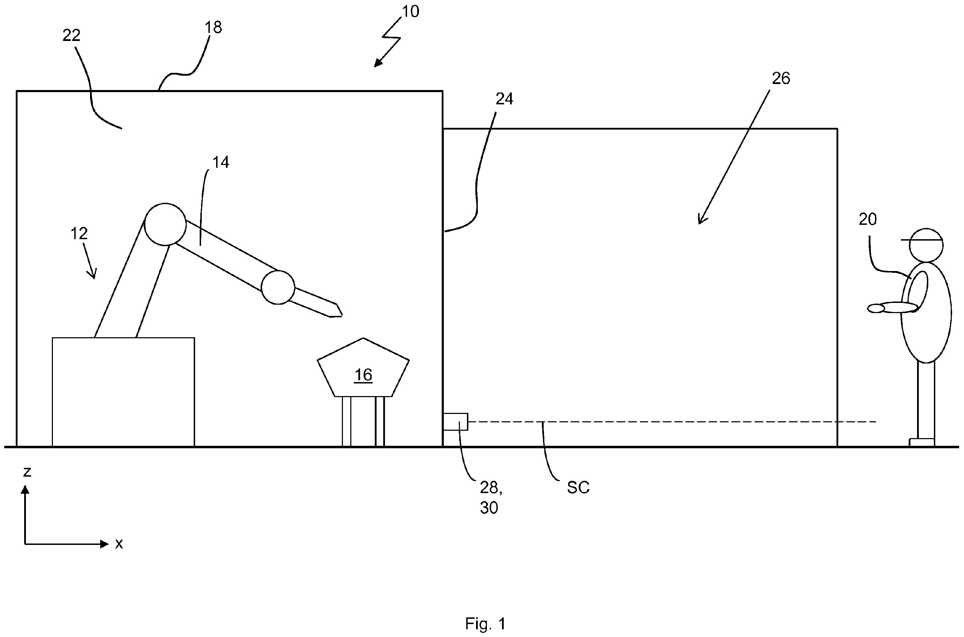

Eine in Fig. 1 dargestellte abzusichernde Anlage 10 umfasst beispielhaft einen Roboter 12 mit einem Roboterarm 14, der ein Werkstück 16 bearbeiten kann. Der Roboter 12 befindet sich in einer Roboterzelle 18, in der sich während des Betriebs kein unzulässiges Objekt 20 aufhalten darf. Insbesondere darf sich wegen der Gefahr für Leib und Leben keine Bedienperson 20 in der Roboterzelle 18 befinden.

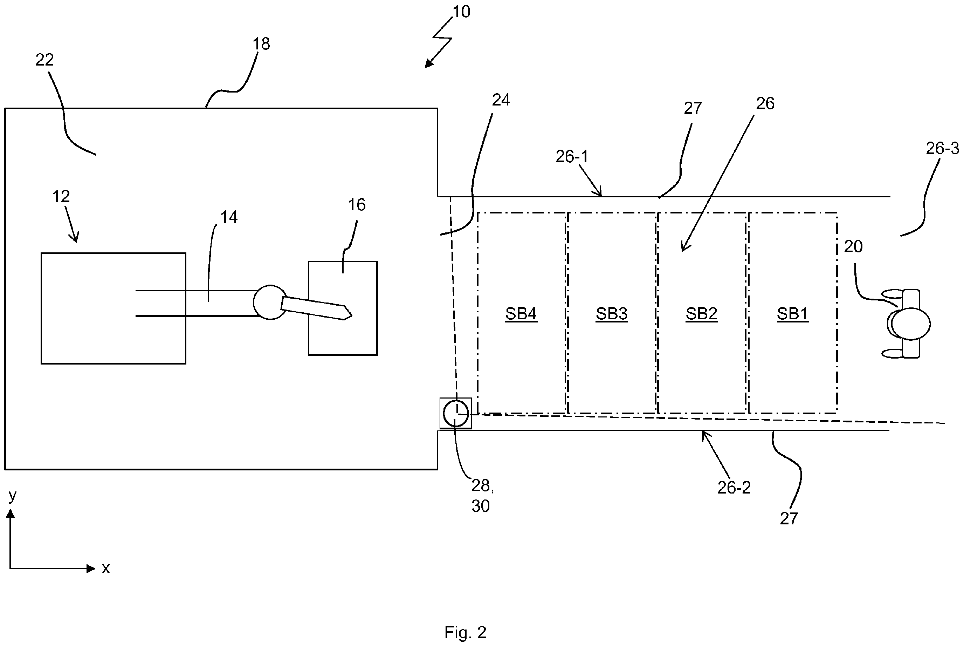

Um dies zu verhindern, bestehen die Wände 22 der Roboterzelle 18 aus einem Gitter oder dergleichen. Ein Zugang 24 muss für Materialzu- und -abführung allerdings frei bleiben (Fig. 2). Der Zugang 24 kann nur über einen Zugangsbereich 26 von der Bedienperson 20 betreten werden, um beispielsweise das fertig bearbeitete Werkstück 16 herauszuholen und ein noch nicht bearbeitetes einzulegen.

Der Zugangsbereich 26 ist zu seinen Seiten 26-1 und 26-2 hin durch mechanische Sperren 27, wie Zäune, abgesichert. Die der Roboterzelle 18 abgewandte Eingangsseite 26-3 ist offen, um Zugang zu erlauben. Die Fläche des Zugangsbereichs 26 ist durch eine erfindungsgemäße optoelektronische Schutzeinrichtung 28 abgesichert. Diese überwacht optisch in einem Überwachungsmodus, ob der Zugangsbereich 26 frei ist. Die optoelektronische Schutzeinrichtung 28 ist in diesem Ausführungsbeispiel als Sicherheits-Laserscanner 30 ausgebildet.

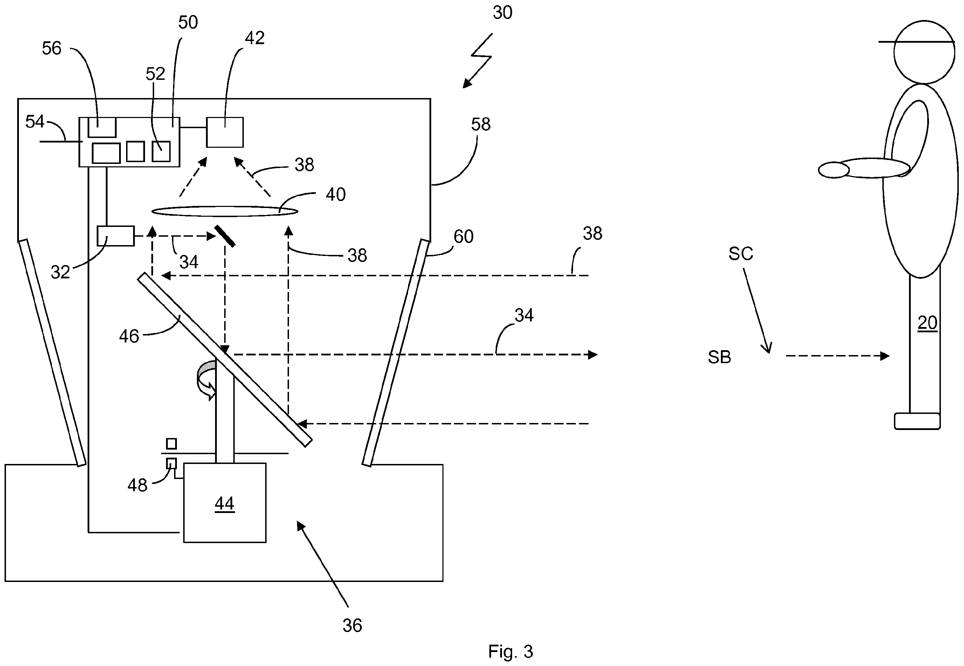

Fig. 3 zeigt schematisch den Aufbau einer Ausführungsform eines solchen Sicherheits-Laserscanners 30. Die von einer Lichtsendeeinheit 32 erzeugten Laserlichtstrahlen 34, die aus einzelnen Lichtpulsen bestehen, werden über eine Lichtablenkeinheit 36 in eine mehrere Schutzbereiche SB einschließende Scanebene SC gelenkt und dort von dem gegebenenfalls vorhandenen Objekt 20 remittiert. Die Scanebene SC umfasst den gesamten Öffnungswinkel des Scanners 30, so dass zumindest der gesamte Zugangsbereich 26 überstrichen wird. Remittiertes Licht 38 gelangt wieder zurück zum Laserscanner 30 und wird dort über die Ablenkeinheit 36 und mittels einer Empfangsoptik 40 von einem (oder mehreren) Lichtempfänger 42 detektiert. Der Lichtempfänger 42 wandelt die optischen Signale in elektrische Empfangssignale um, die an eine Auswerteeinheit 50 zur Verarbeitung geführt sind. Die Lichtablenkeinheit 36 ist in der Regel drehbar ausgestaltet, wobei ein Motor 44 einen Drehspiegel 46 kontinuierlich rotiert. Die jeweilige Winkelstellung des Drehspiegels 46 wird über einen Encoder 48 erfasst. Die von der Lichtsendeeinheit 32 erzeugten Lichtstrahlen 34 überstreichen somit die durch die Rotationsbewegung erzeugte Scanebene SC, in dem sich die zu überwachenden Schutzbereiche SB befinden. Wird ein vom Lichtempfänger 42 empfangenes reflektiertes Lichtsignal 38 aus der Scanebene SC empfangen, so kann aus der Winkelstellung der Ablenkeinheit 36 auf die Winkellage des Objektes in der Scanebene SC geschlossen werden. Zusätzlich wird die Laufzeit der einzelnen Laserlichtpulse des Sendelichts 34 vom Aussenden bis zum Empfang einer Reflexion an dem Objekt 20 erfasst und aus der Lichtlaufzeit unter Verwendung der Lichtgeschwindigkeit auf die Entfernung des Objektes 20 vom Laserscanner 30 geschlossen. Damit ist die Position der gemessenen Reflexion in Polarkoordinaten ermittelt.

Diese Auswertung erfolgt in der Auswerteeinheit 50, die dafür mit der Lichtsendeeinheit 32, dem Lichtempfänger 42, dem Motor 44 und Encoder 48 verbunden ist. Mit den Winkel- und Entfernungsangaben lässt sich der Ort des Objektes 20 ermitteln und auf diese Weise der oder die Schutzbereiche SB vollständig überwachen. Die Schutzbereiche SB sind in ihren Abmessungen durch entsprechende Parameter definiert, die in der Auswerteeinheit 50 in einem Speicher 52 abgelegt sind. Befindet sich in einem der Schutzbereiche SB ein unzulässiges Objekt 20, so kann von der Auswerteeinheit 50 ein entsprechendes Objektfeststellungssignal ausgegeben werden und somit letztendlich ein Sicherheitssignal an einem Ausgang 54 des Laserscanners 30 ausgegeben werden, um zum Beispiel einen Stopp der Anlage 10 herbeizuführen oder diese zumindest in einen gefahrlosen Zustand zu versetzen.

Alle genannten Funktionskomponenten des Sicherheits-Laserscanners 30 sind in einem Gehäuse 58 angeordnet, das zumindest im Bereich der Lichtaus- und Lichteintritte eine zur Vermeidung von direkten Reflexionen in den Empfänger schräggestellte Frontscheibe 60 aufweist.

Tritt also während der Bearbeitung des Werkstücks 16 durch den Roboter 12 die Person in den Zugangsbereich 26 ein, erkennt dies die Schutzeinrichtung 28 und kann gegebenenfalls ein Schaltsignal ausgeben und einen Stopp des Roboters 12 oder zumindest ein Herunterfahren der Anlage 10 in einen gefahrlosen Zustand bewirken. Hat die Person 20 den überwachten Zugangsbereich 26 wieder verlassen, kann die Anlage 10 wieder anlaufen.

Wenn die Person 20 die Anlage betreten muss, um beispielsweise das Werkstück 16 herauszunehmen oder einzulegen, ist es erfindungsgemäß vorgesehen, dass die Anlage 10 selbsttätig, also automatisch wieder anläuft. Um für diesen Fall sicherzugehen, dass die Person 20 den Zugangsbereich 26 nach außen hin verlassen hat und beispielsweise den Zugangsbereich 26 nicht durch Eintritt in die Roboterzelle 18 nach Innen hin verlassen hat, ist die optoelektronische Schutzeinrichtung 28 nach der Erfindung speziell ausgebildet, was im Nachfolgenden insbesondere unter Bezugnahme auf Fig. 3 beschrieben wird.

Der Zugangsbereich 26 wird im Wesentlichen vollständig, also vollflächig, von dem Scanbereich des Laserscanners 30 erfasst. Der so erfasste Zugangsbereich 26 ist aufgeteilt in mehrere, in diesem Beispiel vier, Schutzbereiche SB1 bis SB4, die aneinandergrenzen. Die Schutzbereiche SB1 bis SB4 liegen hintereinander aneinandergereiht von der Eingangsseite 26-3 bis zum Zugang 24. Die Person 20 wird also während des Zugangs zur Anlage 10 zunächst den ersten Schutzbereich SB1, dann SB2, dann SB3 und schließlich SB4 verletzen (Schutzbereichsverletzungen). Wenn die Person 20 die Anlage 10 wieder korrekt verlässt, tritt sie zunächst aus Schutzbereich SB4 aus (Schutzbereichsfreigabe), dann aus SB3, SB2 und schließlich wird Schutzbereich SB1 freigegeben.

Die Schutzeinrichtung 28 weist eine Steuerung 56 auf, die diese Reihenfolge von Ereignissen, also die Reihenfolge von Schutzbereichsverletzungen und Schutzbereichsfreigaben, erfasst und auswertet. Entspricht die erfasste Reihenfolge einer vorbestimmten Reihenfolge, also zum Beispiel der zuvor genannten Schutzbereichsverletzungen von SB1 - SB2 - SB3 - SB4 und dann Schutzbereichsfreigaben von SB4 - SB3 - SB2 - SB1, dann erzeugt die Steuerung 56 ein Schaltsignal, das ein Freigabesignal zur Freigabe des Anlagenbetriebs ist. Dieses Freigabesignal wird an die Anlage ausgegeben.

Die Steuerung 56 kann in die optoelektronische Schutzeinrichtung 28 integriert sein, wie in Fig. 3 dargestellt. Die Steuerung 56 könnte auch separat zur Schutzeinrichtung 28 vorgesehen sein. Die Steuerung 56 empfängt dann von der Schutzeinrichtung welcher Schutzbereich verletzt wird und welcher frei wird. Die Steuerung weiß dann, welche Schutzbereiche frei sind und welche frei geworden sind und welche verletzt werden.

Die vorbestimmten Reihenfolgen müssen nicht der oben beispielhaft beschriebenen entsprechen. Die beschriebene Reihenfolge ist aber die einfachste und bei Zugang einer Person durch einen Zugangsbereich wie in Fig. 2 eine logisch stattfindende, die einfach zu beschreiben ist.

Sinnvollerweise grenzen die Schutzbereiche aneinander ohne Lücken an, so dass es keine Lücken zwischen SB1 und SB2, zwischen SB2 und SB3 sowie zwischen SB3 und SB4 gibt. Die Schutzbereiche SB1 bis SB4 können auch überlappen.

Des Weiteren muss der Laserscanner 30 nicht zu jeder Zeit alle Schutzbereiche SB1 bis SB4 einsehen können. Wenn der Laserscanner 30 wie in Fig. 3 am Zugang 26 angeordnet ist, sind bei einer Verletzung von Schutzbereich SB4 die Schutzbereiche SB1 bis SB3 eventuell abgeschattet. Das ist aber unerheblich, denn SB1 muss immer als erstes verletzt werden und die Freigabe von Schutzbereich SB1 erfolgt immer als letztes (in diesem Ausführungsbeispiel). Deshalb können die Schutzbereiche auch so im Laserscanner parametriert werden, dass sie vollständig überlappen. So kann ein anderer erster Schutzbereich die Abmessungen von SB1+SB2+SB3+SB4 haben, ein anderer zweiter Schutzbereich die Abmessungen von SB2+SB3+SB4, ein anderer dritter Schutzbereich die Abmessungen von SB3+SB4 und der vierte bleibt gleich. Mit diesen anderen vier Schutzbereichen könnte die gleiche Reihenfolge von Ereignissen wie im obigen Ausführungsbeispiel erkannt werden.

Sinnvollerweise weist die Steuerung 56 einen nicht dargestellten Zeitgeber auf, um überwachen zu können, dass die Ereignisse der Reihenfolge auch in einem tolerierbaren Zeitablauf stattfinden, um die Reihenfolge der Ereignisse möglichst eindeutig bestimmten realen Vorgänge sicher zuzuordnen.

## Patentansprüche

1. Optoelektronische Schutzeinrichtung zur optischen Überwachung mehrerer Schutzbereiche (SB1, SB2, SB3, SB4) auf Verletzung durch wenigstens ein Objekt (20) und zur Steuerung einer abzusichernden Anlage (10), mit
- einer Lichtsendeeinheit (32), mit der Sendelicht (34) in die Schutzbereiche (SB1, SB2, SB3, SB4) ausgesendet wird,
- einer Lichtempfangseinheit (42), mit dem an dem Objekt (20) reflektiertes Sendelicht (Empfangslicht 38) empfangen wird und in elektrische Empfangssignale umgewandelt wird,
- einer Auswerteeinheit (50) zur Auswertung der Empfangssignale um festzustellen, welcher der Schutzbereiche (SB1, SB2, SB3, SB4) durch das Objekt (20) verletzt wird, im Folgenden als Schutzbereichsverletzung bezeichnet, und welchen Schutzbereich (SB1, SB2, SB3, SB4) das Objekt (20) verlassen hat, im Folgenden als Schutzbereichsfreigabe bezeichnet,
- mit einer Steuerung (56) zur Erzeugung und Ausgabe eines Schaltsignals, das ein Freigabesignal zur Freigabe des Anlagenbetriebs ist,
**dadurch gekennzeichnet,**
**dass** die Steuerung (56) dazu ausgebildet ist, das Freigabesignal nur dann auszugeben, wenn die Steuerung (56) eine vorbestimmte Reihenfolge von Ereignissen erkennt, wobei die Ereignisse aus Schutzbereichsverletzungen und Schutzbereichsfreigaben der Schutzbereiche (SB1, SB2, SB3, SB4) bestehen und jedes Ereignis entweder eine Schutzbereichsverletzung oder eine Schutzbereichsfreigabe ist.

2. Einrichtung nach Anspruch 1, **dadurch gekennzeichnet, dass** die Schutzbereiche (SB1, SB2, SB3, SB4) lückenlos aneinandergrenzen.

3. Einrichtung nach einem der vorhergehenden Ansprüche, **dadurch gekennzeichnet, dass** die Schutzbereiche (SB1, SB2, SB3, SB4) zumindest teilweise überlappen.

4. Einrichtung nach einem der vorhergehenden Ansprüche, **dadurch gekennzeichnet, dass** die Einrichtung einen Ausgang (54) für ein Stopp-Signal aufweist, wobei die Steuerung ausgebildet ist, das Stopp-Signal zu erzeugen, wenn ein Schutzbereich (SB1, SB2, SB3, SB4) verletzt ist und die vorbestimmte Reihenfolge nicht durchlaufen wurde.

5. Einrichtung nach einem der vorhergehenden Ansprüche, **dadurch gekennzeichnet, dass** die Steuerung (56) einen Zeitgeber aufweist, so dass die Auswerteeinheit überwachen kann, ob aufeinanderfolgende Ereignisse innerhalb bestimmter Zeitfenster erfolgen.

6. Einrichtung nach einem der vorhergehenden Ansprüche, **dadurch gekennzeichnet, dass** die Lichtsendeeinheit (32) nur einen Lichtsender aufweist und die Lichtempfangseinheit (42) nur einen Lichtempfänger.

7. Einrichtung nach einem der vorhergehenden Ansprüche, **dadurch gekennzeichnet, dass** die Einrichtung einen Laserscanner (30) aufweist, dessen Sendelicht die Schutzbereiche (SB1, SB2, SB3, SB4) überstreicht.

8. Verfahren zur optischen Überwachung mehrerer Schutzbereiche (SB1, SB2, SB3, SB4) auf Verletzung durch wenigstens ein Objekt (20) und zur Steuerung einer abzusichernden Anlage (10), bei dem
- Sendelicht (34) von einer Lichtsendeeinheit (32) in die Schutzbereiche (SB1, SB2, SB3, SB4) ausgesandt wird,
- an dem Objekt (20) reflektiertes Sendelicht (38) mit einer Lichtempfangseinheit (42) empfangen wird und in elektrische Empfangssignale umgewandelt wird,
- die Empfangssignale von einer Auswerteeinheit (50) ausgewertet werden um festzustellen, welcher der Schutzbereiche (SB1, SB2, SB3, SB4) durch das Objekt (20) verletzt wird, im Folgenden als Schutzbereichsverletzung bezeichnet, und welchen Schutzbereich (SB1, SB2, SB3, SB4) das Objekt (20) verlassen hat, im Folgenden als Schutzbereichsfreigabe bezeichnet,
- wobei ein Schaltsignal, das ein Freigabesignal zur Freigabe des Anlagenbetriebs ist, in einer Steuerung (56) erzeugt und von dieser ausgegeben wird
- und das Freigabesignal von der Steuerung (56) nur dann ausgegeben wird, wenn die Steuerung (56) eine vorbestimmte Reihenfolge von Ereignissen erkennt, wobei die Ereignisse aus Schutzbereichsverletzungen und Schutzbereichsfreigaben der Schutzbereiche (SB1, SB2, SB3, SB4) bestehen und jedes Ereignis entweder eine Schutzbereichsverletzung oder eine Schutzbereichsfreigabe ist.

## Claims

1. An optoelectronic protective device for the optical monitoring of a plurality of protected zones (SB1, SB2, SB3, SB4) for infringement by at least one object (20) and for controlling a plant (10) to be secured, comprising
- a light transmission unit (32) with which transmitted light (34) is transmitted into the protected zones (SB1, SB2, SB3, SB4);
- a light reception unit (42) with which transmitted light reflected at the object (20) (received light 38) is received and is converted into received electrical signals;
- an evaluation unit (50) for evaluating the received signals to determine which of the protected zones (SB1, SB2, SB3, SB4) is infringed by the object (20), called a protected zone infringement in the following, and which protected zone (SB1, SB2, SB3, SB4) the object (20) has left, called a protected zone release in the following;
- comprising a control (56) for generating and outputting a switching signal that is a release signal for the release of the plant operation,
**characterized in that**
the control (56) is configured only to output the release signal when the control (56) recognizes a predefined sequence of events, with the events comprising protected zone infringements and protected zone releases of the protected zones (SB1, SB2, SB3, SB4) and with each event being either a protected zone infringement or a protected zone release.

2. A device in accordance with claim 1, **characterized in that** the protected zones (SB1, SB2, SB3, SB4) are adjacent to one another in a gapless manner.

3. A device in accordance with one of the preceding claims, **characterized in that** the protected zones (SB1, SB2, SB3, SB4) at least partly overlap.

4. A device in accordance with any one of the preceding claims, **characterized in that** the device has an output (54) for a stop signal, with the control being configured to generate the stop signal when a protected zone (SB1, SB2, SB3, SB4) is infringed and the predefined sequence is not run through.

5. A device in accordance with any one of the preceding claims, **characterized in that** the control (56) has a clock so that the evaluation unit can monitor whether consecutive events take place within specific time windows.

6. A device in accordance with any one of the preceding claims, **characterized in that** the light transmission unit (32) only has one light transmitter and the light reception unit (42) only has one light receiver.

7. A device in accordance with any one of the preceding claims, **characterized in that** the device has a laser scanner (30) whose transmitted light sweeps over the protected zones (SB1, SB2, SB3, SB4).

8. A method for the optical monitoring of a plurality of protected zones (SB1, SB2, SB3, SB4) for infringement by at least one object (20) and for controlling a plant (10) to be secured, in which
- transmitted light (34) is transmitted from a light transmission unit (32) into the protected zones (SB1, SB2, SB3, SB4);
- transmitted light (38) reflected at the object (20) is received by a light reception unit (42) and is converted into received electrical signals;
- the received signals are evaluated by an evaluation unit (50) to determine which of the protected zones (SB1, SB2, SB3, SB4) is infringed by the object (20), called a protected zone infringement in the following, and which protected zone (SB1, SB2, SB3, SB4) the object (20) has left, called a protected zone release in the following,
- wherein a switching signal that is a release signal for releasing the plant operation is generated in a control (56) and is output by it;
- and the release signal is only output by the control (56) when the control (56) recognizes a predefined sequence of events, with the events comprising protected zone infringements and protected zone releases of the protected zones (SB1, SB2, SB3, SB4) and with each event being either a protected zone infringement or a protected zone release.

## Revendications

1. Dispositif de protection optoélectronique pour la surveillance optique de plusieurs zones de protection (SB1, SB2, SB3, SB4) vis-à-vis d'une atteinte par au moins un objet (20), et pour la commande d'une installation (10) à sécuriser, comportant
- un ensemble émetteur de lumière (32) par lequel une lumière d'émission (34) est émise dans les zones de protection (SB1, SB2, SB3, SB4),
- un ensemble récepteur de lumière (42) par lequel une lumière d'émission (lumière de réception 38) réfléchie par l'objet (20) est reçue et transformée en signaux de réception électriques,
- une unité d'évaluation (50) pour évaluer les signaux de réception afin de constater quelle des zones de protection (SB1, SB2, SB3, SB4) est atteinte par l'objet (20), désignée dans ce qui suit par atteinte à la zone de protection, et quelle des zones de protection (SB1, SB2, SB3, SB4) l'objet (20) a quitté, désignée dans ce qui suit par libération de zone de protection,
- une commande (56) pour générer et émettre un signal de commutation qui est un signal de libération pour libérer le fonctionnement de l'installation,
**caractérisé en ce que**
la commande (56) est réalisée pour n'émettre le signal de libération que lorsque la commande (56) reconnaît un ordre chronologique prédéterminé d'événements, les événements étant constitués par des atteintes et des libérations des zones de protection (SB1, SB2, SB3, SB4) et chaque événement étant soit une atteinte à la zone de protection soit une libération de la zone de protection.

2. Dispositif selon la revendication 1, **caractérisé en ce que** les zones de protection (SB1, SB2, SB3, SB4) sont adjacentes les unes aux autres sans intervalle.

3. Dispositif selon l'une des revendications précédentes, **caractérisé en ce que** les zones de protection (SB1, SB2, SB3, SB4) se chevauchent au moins partiellement.

4. Dispositif selon l'une des revendications précédentes, **caractérisé en ce que** le dispositif comprend une sortie (54) pour un signal d'arrêt, la commande étant réalisée pour générer le signal d'arrêt lorsqu'une zone de protection (SB1, SB2, SB3, SB4) est atteinte et que l'ordre chronologique prédéterminé n'a pas été exécuté.

5. Dispositif selon l'une des revendications précédentes, **caractérisé en ce que** la commande (56) comprend une horloge, de sorte que l'unité d'évaluation peut surveiller si des événements successifs s'effectuent à l'intérieur de certaines fenêtres de temps.

6. Dispositif selon l'une des revendications précédentes, **caractérisé en ce que** l'ensemble émetteur de lumière (32) ne comprend qu'un émetteur de lumière et l'ensemble récepteur de lumière (42) ne comprend qu'un récepteur de lumière.

7. Dispositif selon l'une des revendications précédentes, **caractérisé en ce que** le dispositif comprend un scanneur laser (30) dont la lumière d'émission balaie les zones de protection (SB1, SB2, SB3, SB4).

8. Procédé de surveillance optique de plusieurs zones de protection (SB1, SB2, SB3, SB4) vis-à-vis d'une atteinte par au moins un objet (20), et de commande d'une installation (10) à sécuriser, dans lequel
- une lumière d'émission (34) est émise par un ensemble émetteur de lumière (32) dans les zones de protection (SB1, SB2, SB3, SB4),
- une lumière d'émission (38) réfléchie par l'objet (20) est reçue par un ensemble récepteur de lumière (42) et est transformée en signaux de réception électriques,
- les signaux de réception sont évalués par une unité d'évaluation (50) pour constater quelle des zones de protection (SB1, SB2, SB3, SB4) est atteinte par l'objet (20), désignée dans ce qui suit par atteinte à la zone de protection, et quelle des zones de protection (SB1, SB2, SB3, SB4) l'objet (20) a quitté, désignée dans ce qui suit par libération de zone de protection,
- un signal de commutation qui est un signal de libération pour libérer le fonctionnement de l'installation est généré dans une commande (56) et il est émis par celle-ci,
- et le signal de libération n'est émis par la commande (56) que lorsque la commande (56) reconnaît un ordre chronologique prédéterminé d'événements, les événements étant constitués par des atteintes et des libérations des zones de protection (SB1, SB2, SB3, SB4) et chaque événement étant soit une atteinte à la zone de protection soit une libération de la zone de protection.
